# EUROPEAN PATENT APPLICATION

(11) **EP 2 073 151 A1**
(43) Date of publication of application: **24.06.2009**
(21) Application number: 07150346.0
(22) Date of filing: 21.12.2007
(51) Int. Cl.: G06K 19/07, G06K 19/00, G05B 19/418, G06Q 10/00

(54) **Machine parts assembly and management system therefore**

(71) Applicant: Perkins Engines Company Limited, Eastfield Peterborough PE1 5NA (GB)
(72) Inventor: Deane, Daniel, Peterborough, Cambridgeshire PE3 8LN (GB)
(74) Representative: Hatzmann, Martin

(57) **Abstract**

The disclosure relates to an assembly including a first part (12) isolated from functional communication with other parts (14) during use and an electronic data carrier (13) associated with the part. The electronic data carrier is configured to carry data regarding the part (12), and be readable so as to communicate the data to a control unit (16).

## Description

### Technical Field

This disclosure relates to machine parts and to a management system therefore.

### Background

The management of machine parts is a complex task, as machine parts are required at all stages of the manufacturing and distribution chains. Often machine parts management requires tracking, storing, transporting and using millions of parts in many locations. Matters are made increasingly complex by other factors such as mobility of ends product e.g. mobile vehicles, peak demands such as harvest times, maximum allowable age of parts, difficulties in identifying correct parts, incorrect storage, incorrect parts counts, parts superceding, etc. Because of the complexity of parts management, valuable time and revenue is lost by the complexity and vulnerability to errors in current systems. The current disclosure aims to overcome or alleviate at least some of the problems currently existing.

### Summary of the Invention

In one aspect there is disclosed an assembly including a first part isolated from functional communication with other parts during use and an electronic data carrier associated with the part. The electronic data carrier is configured to carry data regarding the part, and to be readable so as to communicate the data.

In another aspect there is disclosed a machine including a base part and a part mounted to the base part. The part is isolated from functional communication with the base part. The machine further includes an electronic data carrier associated with the part wherein the electronic data carrier is configured to carry data regarding the part, and to be readable so as to communicate the data.

In yet another aspect there is disclosed a method of identifying a part which during use is isolated from functional communication with other parts. The method includes enabling electronic communication with an electronic data carrier associated with the part and using data from the electronic marker to identify the part.

Other features and aspects of this disclosure will be apparent from the following description and the accompanying drawings.

### Brief Description of the Drawings

Fig. 1 shows a diagrammatical representation of a parts assembly an a management system therefore in accordance with the current disclosure.
Fig. 2 shows a flowchart for operating the management system of Fig. 1.
Fig. 3 shows a further flowchart for operating the management system of Fig. 1.

### Detailed description

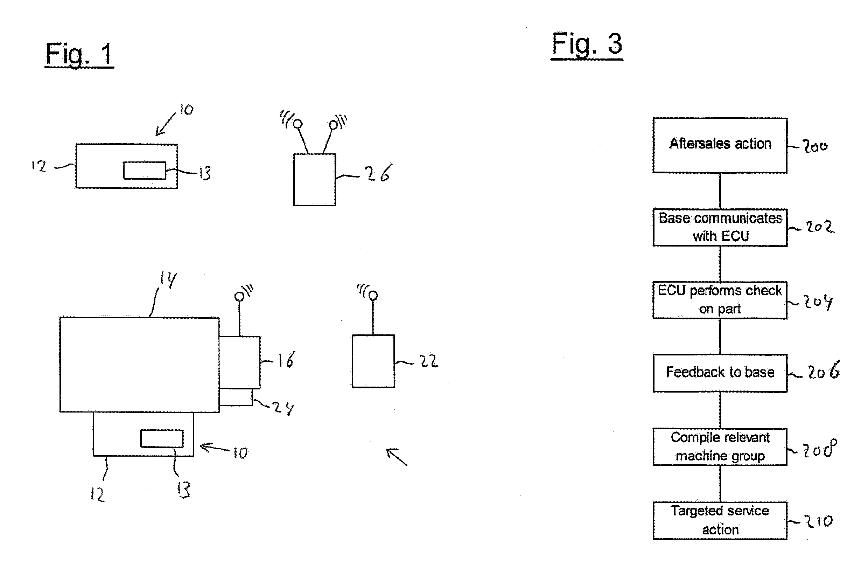

Now referring to Fig. 1 there is shown an exemplary embodiment of a parts assembly generally designated with the numeral 10. The parts assembly 10 may include a part 12 fitted to a base part 14. The part 12 may be a so-called "dumb" or "semi-dumb" part in contrast to a so-called "intelligent" part. For ease of reference, the part 12 may be either a dumb or semi-dumb part, but where it is necessary to distinguish the two types, a part which is dumb will be identified as 12a, whereas a semi-dumb part will be identified as 12b. A dumb part 12a in this context is a part which, in use, has no active functional communication with the base part 14, or any other part for that matter, although the dumb part 12a and base part 14 may be mechanically/hydraulically connected. However, no exchange of functional information takes place between a dumb part 12a and the base part 14. Typical example of a dumb parts may be oil filter, crankshafts, camshafts, hydraulic cylinders, brake discs, etc. A semi-dumb part 12b does not have any active functional communication with the base parts 14 either although there may be some passive functional communication with the base part 14. A passive functional communication is a basic communication for merely indicating an operative state of the semi-dumb part 12b. For example, a semi-dumb part 12b may be unable to relay functional information but it could be able to trigger an alarm in case of malfunction of the semi-dumb part 12b. Typical examples of semi-dumb parts may be alternators and starter motors.

In contrast, an intelligent part may be capable of functional communication with the base part 14 to actively exchange functional information. For example, an intelligent part may be capable to send and receive data to for example form a feedback loop such that the part may be electronically trimmed. A typical example of an intelligent part may for example be a pc peripheral such as a printer.

It may be desirable to associate some information with the part 12. The part 12 may therefore be provided with an electronic data carrier 13 which may have functional information about the part 12 associated with it. The part 12 and the electronic data carrier 13 form part of the parts assembly 10 such that although the part 12 may be inherently incapable of relaying functional information, by providing the electronic data carrier 13 the parts assembly 10 is artificially provided with some form of intelligence. The electronic data carrier 13 may be any electronic device capable of transmitting data associated with the part 12. In one embodiment this is done in response to being polled for the information, e.g. using a microchip or RFID tag. In contrast with for example barcoding, this technology enables the electronic data carrier 13 to be read without being directly visible.

The electronic data carrier 13 may be configured as preferred. In one embodiment the electronic data carrier 13 includes data regarding to one or more identifiers associated with the part 12. The identifiers may for example include part number, manufacturer, type data, serial data, location of manufacturing, date of manufacturing, part expiry date, etc.

The base part 14 may be a single part or an assembly such as a machine, and in particular a mobile vehicle. The base part 14 may be provided with an electronic control unit (ECU) 16. The ECU 16 may be a single electronic controller or it may include multiple independent and/or networked electronic controllers. The ECU 16 may be configured to transmit and/or receive radio signals, either analogue or digital. The radio functionality of the ECU 16 may be integrated in the ECU 16 or the ECU 16 may be configured to utilize a dedicated radio arrangement (not shown).

Although the ECU 16 may not have functional communication with the part 12, it may be able to communicate with the electronic data carrier 13 associated with the part 12.

The parts assembly 10 may be used in a management system 20.

In one embodiment the management system 20 includes one or more remote stations 22 which may be capable of communicating with the ECU 16.

In one embodiment the management system 20 includes a positioning system 24 such as GPS to be arranged in association with the ECU 16 such that the position of the ECU 16 may be know to the management system 20.

In one embodiment the managements system includes one or more scanning arrangements 26 capable of communicating with the electronic data carrier 13. The scanning arrangement 26 may be a portable scanning arrangement such as a handheld scanner or it may be a fixed or semi-fixed scanning arrangement such as electronic gate or doorway. The operation of the management system 20 will be explained in more detail below.

### Industrial Applicability

The lifecycle of a part such as part 12 may be as follows. During manufacturing it may be required to provide the part 12 with functional communication capability. As the part 12 is inherently incapable of functional communication, the part 12 may be provided with the electronic data carrier 13 to form the parts assembly 10. The parts assembly 10 and therefore the part 12 may now be recognized and correctly identified with minimum effort even if packed in unmarked or incorrectly marked packaging or whilst the parts assembly 10 is mounted on the base part 14 and perhaps not easily visible.

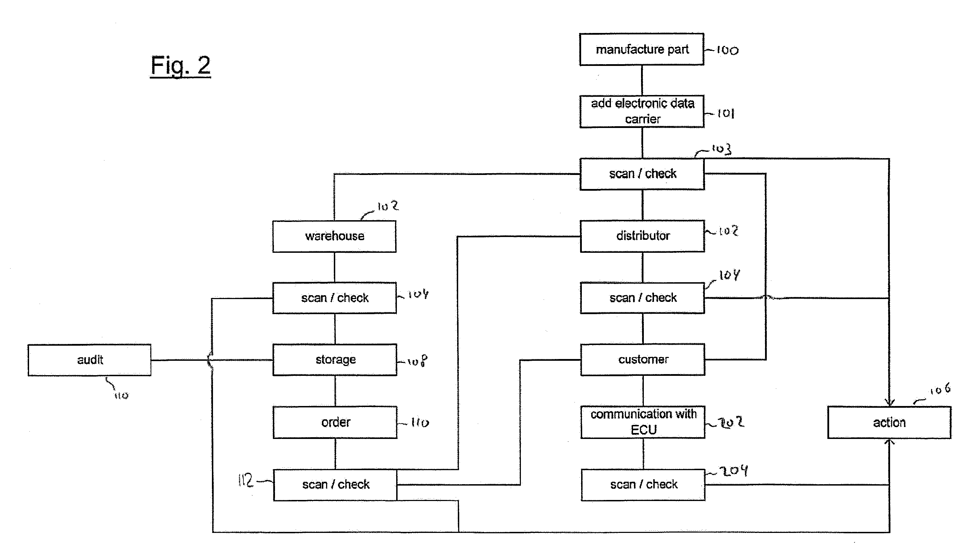

In one embodiment the parts assembly 10 may be manufactured and flow through the aftersales process. A typical example thereof may be where the parts assembly 10 is temporarily stored in a warehouse and subsequently shipped to an end customer via a distributions system. Fig. 2 shows an exemplary method of how such an order may be handled via a distribution system. It is to be understood that the distribution system shown is exemplary only and may in reality be more or less complex requiring more or less handling actions.

In step 100 the part 12 may be manufactured. In step 101 the part 12 may be provided with the electronic data carrier 13 to form the parts assembly 10. Providing the part 12 with the electronic data carrier 13 may be done at any preferred stage. In one embodiment the manufacturer of the part 12 may, as a step of their manufacturing process add the electronic data carrier 13 to the part 12. In one embodiment the part 12 may be provided with the electronic data carrier 13 after it has left the manufacturing process, e.g. upon arrival at a warehouse and/or at an OEM.

In the exemplary work flow of Fig. 2 the parts assembly 10 may be shipped such that it may be received by a storage area in step 102. The storage area may for example be a warehouse, a distributor, or a pre-build storage area in an assembly plant of an OEM where the assembly is held ready for assembly to the base part 14. At each stage of the handling process the electronic data carrier 13 may be read remotely with the scanning arrangement 26. For example, before leaving the manufacturer the electronic data carrier 13 may be scanned in step 103. In addition, or alternatively, as soon as a batch of parts assemblies 10 enters the storage area at step 102, an electronic gate may scan the batch in step 104 to detect what and how many parts assemblies 10 are entering the storage area. In case the scanning process detects discrepancies in relation to the parts assemblies 10 an action may be taken in step 106, which may for example be an alarm being triggered. Discrepancies may for example relate to qualitative characteristics like incorrect items in the batch or unexpected parts assemblies. Discrepancies may also relate to quantitative characteristics like unexpected and/or incorrect quantities. When no discrepancies are detected, a process may automatically be triggered in step 108 indicating to a storage operative or automated system where the parts assemblies 10 are to be stored in the warehouse. An automated system may also provide for an alarm if it detects that parts assemblies 10 are in or approaching an incorrect section of the storage location. This may for example be achieved by providing scanning ports through which the parts assemblies 10 have to travel whilst being shipped through the storage facility.

During storage audits, such as represented by step 110, a particular subsection of a storage location may be checked for quantities and types of content. Whereas previously the location, for example a storage bin, had to be opened, handled and/or emptied, the method and sub-assemblies in accordance with the current disclosure provide for a more efficient and accurate identification and parts count of parts assemblies 10. All what is needed is a scanning arrangement 26 configured to be able detect and count the particular electronic data carriers 13 associated with the parts 12. In one embodiment the scanning arrangement 26 may be able to detect a location of the part 12. In one embodiment the scanning arrangement 26 may also be configured to detect "alien" components, i.e. unexpected components having electronic data carriers indicative of another part than expected. The action of step 106 may then be a corrective action indicating that the relevant alien parts be removed. In one embodiment the action may include that a parts assembly 10 be removed when the scanning arrangement 26 recognises that the parts assembly 10 is no longer suitable,. The part 12 may for example have been superceded with later models or updates or the shelf life of the part 12 may have expired.

In one embodiment the parts assembly 10 may form part of a customer or distributor order. The parts assembly 10 may be picked from its storage location and prepared for shipment to its destination in step 110. At some point before shipping the electronic data carrier 13 may be read in step 112 to ensure the order includes the correct parts assembly 10.

It is clear that the process of scanning and checking may be performed at a plurality of locations and times during storage and distribution, all enhancing the accuracy of any logistics associated with the parts assembly 10.

Now turning to Fig. 3 there is shown an exemplary work flow for the management system 20. In this example the parts assembly 10 may be mounted on the base part 14 and may be with an end user. For example the base part 14 may be a mobile construction machine and the end user may be the owner of the mobile construction machine. It may be desirable to know if a base part 14 is provided with a particular parts assembly 10. For example, it may be desirable to upgrade or replace a particular group of parts 12, for example if a particular batch of parts 12 are found to be prone to premature failure after they have already been sold. Previously it was needed to maintain records so as to track particular parts assemblies 10, but this may be complex and time consuming as machines are often being resold, records not being kept accurately etc. With the proposed system this may be simplified. For example, in step 200 it may be decided it is desirable to identify a particular group of parts assemblies 10. The management system 20 may via the remote station 22 broadcast to all ECUs 16 so as to communicate with all ECUs 16 in step 202. The communication may request from the ECUs 16 to identify the particular parts assemblies 10 associated with the ECUs 16 as shown in steps 202. The ECU 16 may subsequently communicate with the electronic data carrier 13 in step 204. An individual ECU 16 may either merely transmit data from the electronic data carrier 13 to the remote station 22 where the parts assembly 10 in question may be identified, or the ECU 16 itself may actively identify the parts assembly 10. Either way, the remote station 22 will receive data indicative of the particular parts assembly 10 in step 206 and may use data of the positioning system 24 to identify and pinpoint the location of, any parts assemblies 10 targeted in the operation. Once such list is compiled in step 208, any subsequent work can be performed via targeted actions in step 210.

In one embodiment the packaging costs associated with the parts assemblies 10 may be reduced. Currently many parts have unique packaging associated therewith as it is often required to identify the part it contains without the packaging having to be opened and or modified. Decals are sometimes applied to packaging to enable such external identification, but decals add cost and complexity to parts management systems. No external identifier may be required for packaging containing a parts assembly 10 as the parts assembly 10 can be identified remotely via the electronic data carrier 13.

Although the preferred embodiments of this invention have been described herein, improvements and modifications may be incorporated without departing from the scope of the following claims.

## Claims

1. An assembly comprising:
a first part isolated from functional communication with other parts during use;
an electronic data carrier associated with said part, said electronic data carrier being configured to:
carry data regarding said part, and;
being readable so as to communicate said data.

2. An assembly according to claim 1, wherein said part is mounted on said other parts.

3. An assembly according to any of the preceding claims, wherein said other part is a host machine.

4. An assembly according to any of the preceding claims, wherein said part is electronically non-interactive.

5. An assembly according to any of the preceding claims, wherein said electronic data carrier is capable of transmitting data.

6. An assembly according to any of the preceding claims, wherein said electronic data carrier is a micro chip.

7. An assembly according to any of the preceding claims, wherein said electronic data carrier is embedded in said part.

8. An assembly according to any of the preceding claims, wherein said part is a filtration device.

9. A machine comprising:
a base part;
a part mounted to said base part, said part being isolated from functional communication with said base part;
an electronic data carrier associated with said part, said electronic data carrier being configured to:
carry data regarding said part, and;
being readable so as to communicate said data.

10. A method of identifying a part which during use is isolated from functional communication with other parts, the method comprising:
enabling electronic communication with an electronic data carrier associated with said part;
using data from said electronic marker to identify said part.

11. A method according to claim 10, further including transmitting data from said electronic data carrier.

12. A method according to claim 10, further including communicating with electronic control units associated with a group of machines.

13. A method according to 12, further including retrieving data from at least a portion of said electronic control units to identify any machines within said group that are provided with said parts.

14. A method according to claim 13, further including determining a relevant machine group for service action

15. A method according to claim 14 further comprising taking desired action in response to determining said relevant machine group.

16. A method according to 15 wherein taking desired action includes replacing at least a portion of said parts on in said relevant machine group.

17. A method according to any of claims 10-11, further including scanning a storage area for said parts and detecting discrepancies in relation to said parts.

18. A method according to claim 17 wherein said detecting discrepancies includes detecting quantitative characteristics relating to said parts.

19. A method according to any of claims 17-18 wherein said detecting discrepancies includes detecting qualitative characteristics relating to said parts.

20. A method according to any of claims 10-19 further including detecting a location of said part.
